# EUROPEAN PATENT APPLICATION

(11) **EP 3 712 220 A1**
(43) Date of publication of application: **23.09.2020**
(21) Application number: 20159574.1
(22) Date of filing: 26.02.2020
(51) Int. Cl.: C09J 7/22, C08K 5/00, C09J 7/30, G09F 3/10

(54) **A PRINT ADHESIVE LABEL AND AN ADHEREND**

(30) Priority: 28.02.2019 JP 2019035183
(71) Applicant: LINTEC Corporation, Tokyo 173-0001 (JP)
(72) Inventor: Voss, Andrew James, High Wycombe, Buckinghamshire HP12 3SL (GB)
(74) Representative: J A Kemp LLP

(57) **Abstract**

Provided is a print adhesive label comprising a release sheet consisting of a release sheet substrate and a release layer, and an adhesive label consisting of a label substrate and an adhesive layer, wherein a print layer with information printed is provided between the release layer and the adhesive layer; the adhesive layer comprises a fluorescence dye; the adhesive layer is pasted on the release layer and the print layer; a surface of the adhesive layer has a region where the print layer does not exist in a planar view; the label substrate is a transparent plastic film; and the adhesive layer is transparent. According to the present invention, a print adhesive label and an adherend using the same, wherein the pasted security label is inconspicuous, and designability of an adherend such as a product is not impaired, can be provided.

## Description

### TECHNICAL FIELD

The present invention relates to a print adhesive label and an adherend using the same. More specifically, the present invention relates to a print adhesive label and an adherend using the same, which are useful as a security label.

### BACKGROUND ART

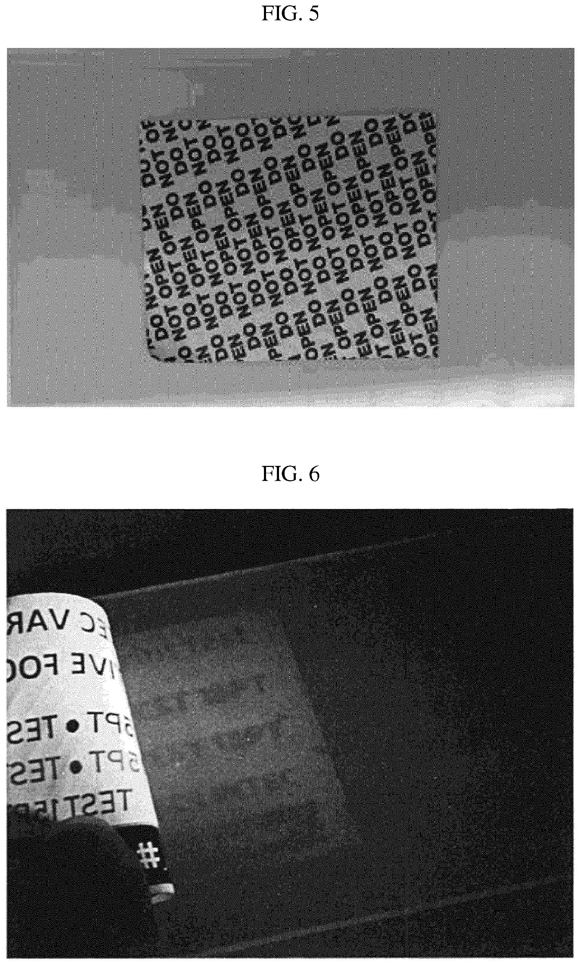

In order to prevent unauthorized opening and forgery, a security label is used for various products such as a television, a computer and a vehicle. For example, Patent Literature 1 discloses a security label for applying an identifier pattern such as a code, a personal identification number or a vehicle registration number to an adherend, wherein a barrier medium configured to form the identifier pattern is located on an adhesive layer, and the barrier medium selectively blocks diffusion of an identifier medium such as a UV fluorescent dye in the adhesive agent into the adherend. As shown in FIG. 6 of the present application, using the security label of Patent Literature 1, the identifier pattern can be applied to the adherend by removing an adhesive label from a plastic plate (the adherend) to which the security label is pasted and then irradiating the plastic plate with a black light. However, as shown in FIG. 5 of the present application, in the case where designable printing, etc. is performed on the adherend such as a product, an opaque substrate used on the label substrate, or information printed on the label substrate, imparts unnecessary concealment, and the designability of the appearance of the adherend is impaired.

### CITATION LIST

### PATENT LITERATURE

Patent Literature 1: WO 97/40484

### SUMMARY OF THE INVENTION

### TECHNICAL PROBLEM

There has been a need for a method of providing security wherein a pasted security label is inconspicuous and is invisible to consumers' eyes from the viewpoint of the designability of the appearance, in a clothing ornament such as a clothing, an accessary, and a high value product such as an electrical appliance, a furniture, etc. Therefore, an object of the present invention is to provide a print adhesive label and an adherend using the same, wherein the pasted security label is inconspicuous, and security is provided without being visible to consumers' eyes, and the designability of the appearance is not impaired.

### SOLUTION TO THE PROBLEM

The present inventor has done intensive studies to solve the above problems, and has found that the above problems are solved by a print adhesive label comprising a release sheet consisting of a release sheet substrate and a release layer, and an adhesive label consisting of a label substrate and an adhesive layer, wherein a print layer with information printed is provided between the release layer and the adhesive layer; the adhesive layer comprises a fluorescence dye; the adhesive layer is pasted on the release layer and the print layer; a surface of the adhesive layer has a region where the print layer does not exist in a planar view; the label substrate is a transparent plastic film; and the adhesive layer is transparent. As a result, the present invention has been completed. That is, the present invention is as follows.
[1] A print adhesive label comprising a release sheet consisting of a release sheet substrate and a release layer, and an adhesive label consisting of a label substrate and an adhesive layer,
   wherein a print layer with information printed is provided between the release layer and the adhesive layer;
   the adhesive layer comprises a fluorescence dye;
   the adhesive layer is pasted on the release layer and the print layer;
   a surface of the adhesive layer has a region where the print layer does not exist in a planar view;
   the label substrate is a transparent plastic film; and
   the adhesive layer is transparent.
[2] The print adhesive label according to [1], wherein the label substrate is a vulnerable substrate.
[3] The print adhesive label according to [1] or [2], wherein the print layer is transparent.
[4] The print adhesive label according to any one of [1] to [3],
   wherein adhesive transfer does not occur from the adhesive layer, when the release sheet is removed from the adhesive label, and the adhesive layer is pasted on an adherend, and the adhesive label is removed from the adherend.
[5] The print adhesive label according to any one of [1] to [4], wherein the print layer is not embedded in the adhesive layer, when the release sheet is removed from the adhesive label.
[6] An adherend pasted with the print adhesive label according to any one of [1] to [5] from which the release sheet is removed.
[7] The adherend obtained by removing the adhesive label from the adherend according to [6],
   wherein the fluorescence dye transfers to a region of the adherend except for a region of the adherend attached to the print layer.

### ADVANTAGEOUS EFFECTS OF THE INVENTION

When the adhesive label is pasted on an adherend such as a product using the print adhesive label of the present invention, since the label substrate and the adhesive layer are transparent, the pasted adhesive label is inconspicuous and the designability of the adherend is not impaired. Since the adhesive layer comprises the fluorescent dye, the entire adhesive layer emits light by irradiating the adherend on which the adhesive label is pasted with a black light (an ultraviolet lamp, etc.) through the adhesive label, and security can be provided without being visible. In addition, by making the print layer be colored, information on the print layer can be seen through the adhesive label. On the other hand, by making the printing layer be transparent, the label substrate, the adhesive layer and the print layer are optically integrated, and the adherend is visually recognized as it is, so that deterioration of the designability of the adherend can be further reduced. Furthermore, when the adhesive label pasted on the adherend is removed from the adherend, the fluorescent dye transfers to a region where the print layer does not exist on the surface of the adhesive layer in a planar view, that is, to a region of the adherend except for the region of the adherend attached to the print layer. Therefore, information of the print layer can be confirmed as white spots as a reverse image (in a state in which the fluorescent dye does not develop color) by irradiating a black light. When the print layer is transparent, information on the print layer cannot be visually confirmed, but when the adhesive label pasted on the adherend is removed from the adherend, information on the print layer can be confirmed as white spots as a reverse image (in a state where the fluorescent dye does not develop color) by irradiating a black light, and thereby security can be further improved.

### BRIEF DESCRIPTION OF THE DRAWINGS

FIG. 1 shows a conceptual diagram which schematically shows the print adhesive label of the present invention, in the state where the release sheet and the adhesive label are pasted.
FIG. 2 shows a conceptual diagram which schematically shows a method of producing the print adhesive label of the present invention.
FIG. 3 shows a conceptual diagram of the print adhesive label of the present invention from which the release sheet is removed.
FIG. 4 shows a conceptual diagram of the adherend on which the print adhesive label of the present invention from which the release sheet is removed is pasted.
The fluorescence dye transfers to a region of the adherend except for a region of the adherend attached to the print layer.
FIG. 5 shows a photograph of the conventional security label, which was taken from the label substrate side.
FIG. 6 shows a photograph of the polypropylene plate (adherend) irradiated with a black light, which was obtained by pasting the conventional security label on a polypropylene plate and removing the adhesive label from the polypropylene plate.

### DESCRIPTION OF THE INVENTION

### <Print adhesive label>

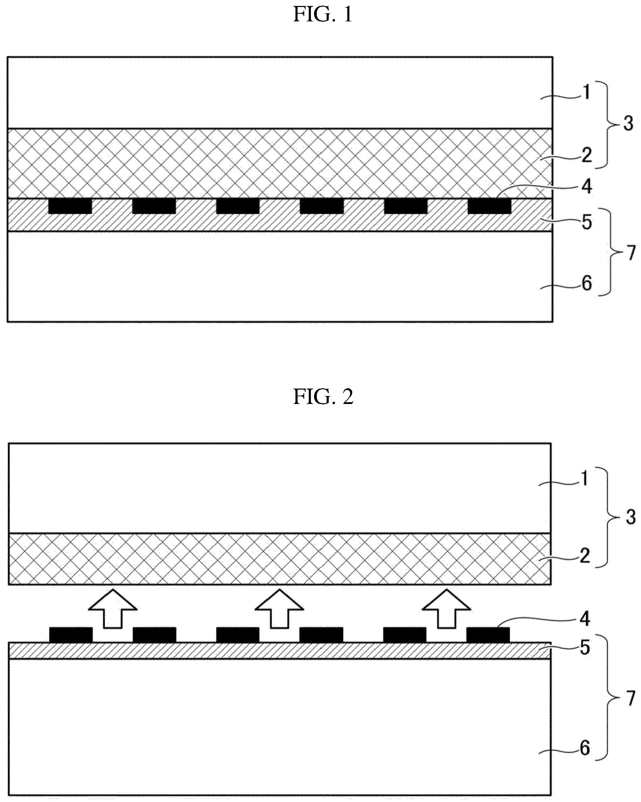

As shown in FIG. 1, the print adhesive label of the present invention is a print adhesive label comprising the release sheet 7 consisting of the release sheet substrate 6 and the release layer 5, and the adhesive label 3 consisting of the label substrate 1 and the adhesive layer 2, wherein the print layer 4 with information printed is provided between the release layer 5 and the adhesive layer 2; the adhesive layer 2 comprises the fluorescence dye 9; the adhesive layer 2 is pasted on the release layer 5 and the print layer 4; the surface of the adhesive layer 2 has a region where the print layer 4 does not exist in a planar view; the label substrate 1 is a transparent plastic film; and the adhesive layer 2 is transparent. In the present specification, "transparent" does not mean only colorless transparent, but also includes colored transparent or translucent. In other words, everything is referred to as "transparent", as long as its internal state can be visually recognized by the naked eyes. The same applies to matters in the following description.

### (Release sheet 7)

The release sheet 7 is composed of the release sheet substrate 6 and the release layer 5. The release sheet substrate 6 has a function of supporting the release layer 5. The release sheet substrate 6 is composed of, for example, a polyester film such as a polyethylene terephthalate film and a polybutylene terephthalate film; a polyolefin film such as a polypropylene film, a polyethylene film and a polymethylpentene film; a plastic film such as a polycarbonate film and a polyvinyl chloride film; a metal foil such as aluminum and stainless steel; a paper base material such as glassine paper, kraft paper, coated paper and fine paper; an impregnated paper such as dust-free paper and drawing paper; a laminated paper base material such as a single-sided polyethylene laminated fine paper, a double-sided polyethylene laminated fine paper, a single-sided polyethylene laminated glassine paper and a double-sided polyethylene laminated glassine paper; a paper such as a synthetic paper; a laminated product thereof, and the like. When the print layer 4 is printed on the release sheet 7 with a laser printer or the like, the release sheet substrate 6 may contract due to heat when the toner image is fixed to the release layer 5 in the release sheet 7, and the release sheet 7 may curl. In case that the release sheet 7 is likely to curl by heat when the print layer 4 is printed, in order to prevent curl, the release sheet 7 is preferably one that does not curl by heat. Curl of the release sheet 7 by heat can be prevented by using, for example, a polyester film, a single-sided polyethylene laminated fine paper, a double-sided polyethylene laminated fine paper, or the like, as the release sheet substrate 6.

A thickness of the release sheet substrate 6 is not particularly limited, but is usually 20 to 200 µm, preferably 25 to 100 µm.

Examples of a release agent used for the release layer 5, include a silicone release agent, a non-silicone release agent and the like. Examples of the silicone release agent, include an addition silicone produced by an addition reaction of an organopolysiloxane containing aliphatic unsaturated groups and an organohydrogenpolysiloxane using a platinum compound as a catalyst; and a condensation silicone produced by a condensation reaction of an organopolysiloxane using a metal organic acid salt catalyst such as an organotin compound. These silicone compositions may be appropriately used as a solvent type composition in which the silicone is dissolved in an organic solvent such as toluene, an emulsion type composition in which the silicone is emulsified, or a solvent-free type composition consisting only of the silicone.

Examples of the non-silicone release agent, include a polyolefin such as a polyethylene, a thermoplastic elastomer such as an olefinic thermoplastic elastomer, a fluororesin such as a tetrafluoroethylene, a wax, an alkyd resin, and a mixture thereof.

The release layer 5 may contain other various additives such as another resin component, a plasticizer and a stabilizer. A thickness of the release layer 5 is not particularly limited, but is preferably 0.1 to 50 µm, more preferably 0.3 to 30 µm. When the thickness of the release layer 5 is thinner than 0.1 pm, the peelability is inferior. When the thickness of the release layer 5 is thicker than 50 µm, the peelability is not improved and it is uneconomical.

### (Print layer 4)

Information provided by the print layer 4, includes fixed information and/or variable information. The fixed information and/or variable information may be information that imparts security for prevention of unauthorized opening and forgery to the adherend 8 of various products such as a television, a computer and a vehicle. Examples of the fixed information include a company name and a product name. Examples of the variable information include a predetermined number of set of labels, different information for each label, a lot number, a serial number, a production date, and the like.

The print layer 4 has a function of inhibiting transfer of the fluorescence dye 9 contained in the adhesive layer 2 to the adherend 8. That is, the fluorescence dye 9 contained in the adhesive layer 2 transfers to a region of the adherend 8 except for a region of the adherend 8 attached to the print layer 4. Then, the information of the print layer 4 is confirmed as white spots as a reversed image (in a state where the fluorescent dye 9 does not develop color) by irradiating the adherend 8 with a black light. Examples of a printing method for forming the print layer 4, include a laser printer, a thermal transfer printer, screen printing, a typewriter, an ink jet printer, a UV printer, and the like. The method is preferably a laser printer, a laser printers using a carbon dioxide laser, or the like.

One or more of various colors may be used in the print layer 4. Moreover, the transparent print layer 4 may be used singly, or in combination with the print layer 4 having various colors. The transparent print layer 4 can be formed by using, for example, a colorless transparent ink, a colored transparent ink, or the like. The print layer 4 is preferably colorless and transparent from the viewpoint of further improving security and the designability. By making the print layer 4 colorless and transparent, information on the print layer 4 cannot be seen with the naked eyes in the state of the adhesive label 3 pasted on the adherend 8. In addition, since information printed on the adherend 8 is directly visible through the adhesive label 3 in the state of the adhesive label 3 pasted on the adherend 8, the designability of the appearance of the adherend 8 is more retained. Even if a black light (an ultraviolet lamp, etc.) is irradiated in the state of the adhesive label 3 pasted on the adherend 8, the entire adhesive layer 2 emits light and the information on the print layer 4 cannot be seen. Therefore, unless the adhesive label 3 is removed, the information on the print layer 4 is kept secret. On the other hand, by removing the adhesive label 3, white spots can be confirmed as a reverse image of the print layer 4 (in a state where the fluorescence dye 9 does not develop color) by irradiating a black light.

In the print adhesive label of the present invention, it is preferable that the print layer 4 is not completely embedded in the adhesive layer 2 when the release sheet 7 is removed from the adhesive label 3. Since the print layer 4 is not completely embedded in the adhesive layer 2, a region where the print layer 4 contacts the adherend 8 and a region where the print layer 4 does not contact the adherend 8 are definitely divided, when the adhesive label 3 is pasted on the adherend 8. The fluorescence dye 9 contained in the adhesive layer 2 transfers to only a region where the print layer 4 does not contact the adherend 8 (a region where the print layer 4 does not exist on the surface of the adhesive layer 2 in a plan view, that is, a region of the adherend 8 except for a region of the adherend 8 attached to the print layer 4), so that the inverted image of the information on the print layer 4 is difficult to blur.

In order to prevent the print layer 4 from being completely embedded in the adhesive layer 2, the thickness and material of the print layer 4, or the thickness and material of the adhesive layer 2 may be adjusted, and the pasting conditions (temperature, pressure) between the adhesive layer 2 in the adhesive label 3 and the release sheet 7 may be adjusted by optimization, when the print adhesive label of the present invention is produced by printing the printed layer 4 on the release sheet 7, as described later.

A thickness of the print layer 4 is preferably 0.5 to 5 pm, more preferably 0.8 to 3 µm. When the thickness of the print layer 4 is less than 0.5 pm, a region where the print layer 4 contacts the adherend 8 and a region where the print layer 4 does not contact the adherend 8 are difficult to be definitely divided, when the adhesive label 3 is pasted on the adherend 8. As a result, the fluorescence dye 9 contained in the adhesive layer 2 easily transfers to the edge of the region where the print layer 4 contacts the adherend 8, and the inverted image of the print layer 4 is likely to blur. When the thickness of the print layer 4 exceeds 5 µm, the adhesive layer 2 is difficult to contact the adherend 8 when the print adhesive label is pasted on the adherend 8, and the adhesive strength of the print adhesive label may be reduced. The blur of the reverse image of the print layer 4 due to the transfer of the fluorescence dye 9 contained in the adhesive layer 2 can be controlled, by further adjusting the shape of the print layer 4, the font, size or line width, etc. of a character, in addition to the thickness of the print layer 4. In the present invention, "the print layer 4 is not completely embedded in the adhesive layer 2" refers to the state that there is a difference in level between the surface of the print layer 4 which contacts the release layer 5 and the surface of the region of the adhesive layer 2 where the print layer 4 does not exist. The difference can be confirmed by removing the release sheet 7 in the print adhesive label and observing the exposed adhesive layer 2 with an optical microscope.

### (Adhesive label 3)

The adhesive label 3 is composed of the label substrate 1 and the adhesive layer 2, and commercially available and known adhesive labels may also be used.

The label substrate 1 has a function of supporting the adhesive layer 2 and may be a single layer or a multilayer. The label substrate 1 is a transparent plastic film. The label substrate 1 is composed of, for example, a polyethylene terephthalate film, a polybutylene terephthalate film, a polyethylene film, a polypropylene film, a polymethylpentene film, a polycarbonate film, a polyvinyl chloride film, an acrylic resin vulnerable sheet, an acrylic urethane resin vulnerable sheet, a cellulose resin film such as a triacetylcellulose, a plastic film such as a polystyrene film and a polyurethane film. The label substrate 1 may be subjected to a surface treatment to the front surface or the back surface thereof for the purpose of improving adhesion of the adhesive layer 2. Since the label substrate 1 and the adhesive layer 2 are transparent, it is hardly noticeable that the adhesive label 3 is pasted on the adherend 8, and the information printed on the adherend 8 is visible through the adhesive label 3 as it is in the state of the adhesive label 3 pasted on the adherend 8, and the designability of the adherend 8 such as a product is not impaired. In addition, the normal label cannot be distinguished with the naked eyes in the state of the adhesive label 3 pasted on the adherend 8, but by irradiating a black light through the adhesive label 3, light emission by the fluorescence dye 9 can be confirmed. Therefore, security can be further improved. The label substrate 1 is preferably colorless and transparent from the viewpoint of further improving security and the designability. A thickness of the label substrate 1 is not particularly limited, but is preferably about 20 to 200 µm, and more preferably about 25 to 100 µm.

The label substrate 1 is preferably a vulnerable substrate. By using the vulnerable label substrate 1, when the adhesive label 3 is removed from the adherend 8, the label substrate 1 is damaged and cannot be removed cleanly, which is effective for preventing falsification. Examples of the vulnerable label substrate 1 include a colorless and transparent acrylic resin vulnerable sheet, acrylic urethane resin vulnerable sheet, urethane resin vulnerable sheet, polyvinyl chloride, cellulose resin film such as a triacetyl cellulose, polystyrene film, polyurethane film, and the like.

The adhesive layer 2 comprises the fluorescence dye 9, and is transparent. The adhesive layer 2 is preferably colorless and transparent from the viewpoint of further improving security and the designability. The adhesive layer 2 is composed of an adhesive composition mainly comprising an adhesive. As the adhesive, a known adhesive such as an acrylic adhesive, a polyurethane adhesive, an epoxy adhesive, a rubber adhesive, a silicone adhesive and a polyester adhesive, may be used. The adhesive is preferably an acrylic adhesive. As the adhesive, an adhesive wherein its adhesive strength to the label substrate 1 is larger than its adhesive strength to the adherend 8, and its adhesive strength to the print layer 4 is larger than adhesive strength between the print layer 4 and the release layer 5, can be preferably used. A thickness of the adhesive layer 2 is not particularly limited, and is, for example, 1 to 200 pm, preferably 10 to 100 pm, and more preferably 10 to 50 µm.

As the adhesive, it is preferable that adhesive transfer does not occur from the adhesive layer 2 when the adhesive label 3 is removed from the adherend 8 in the state of the adhesive label 3 pasted on the adherend 8. By no adhesive transfer, it cannot be acknowledged that the adhesive label 3 was pasted on the adherend 8, unless a black light is irradiated. Specifically, the adhesive strength of the print adhesive label of the present invention based on the Japanese Industrial Standard: JIS Z 0237: 2000, is preferably 2.0 N / 25 mm or more, more preferably 3.0 N / 25 mm or more, under a condition of 23 °C and 50% RH (relative humidity). The upper limit of the adhesive strength is preferably, for example, 20 N / 25 mm or less, more preferably 15 N / 25 mm or less, and still more preferably 12.5 N / 25 mm or less. In the present invention, the value of the adhesive strength refers to a value measured by the following procedure: preparing a test piece by cutting the print adhesive label to 25 mm × 300 mm; peeling off the release sheet 7 in the print adhesive label; pasting the test piece to a stainless steel plate (SUS 304) under a condition of 23 °C and 50% RH (relative humidity) to obtain a test sample; and measuring the adhesive strength at 24 hours after pasting at a pulling speed of 300 mm/min by a 180 degree peeling method, based on JIS Z 0237: 2000, under the same condition.

The fluorescence dye 9 contained in the adhesive layer 2 may be a dye that emits fluorescence by absorbing an ultraviolet light, such as a diaminostilbene dye, a quinazolone dye, a perylene dye, a coumarin dye, an oxazole dye, a triazole dye, a carbazole dye, a pyridine dye, and a naphthalic acid dye and an imidazolone dye, and a fluorescent generator such as a fluorescein, a thioflavine, an eosin, a rhodamine and a terphenyl, and the like. One type of these may be used singly, or two or more types of these may be used in combination. The content of the fluorescence dye 9 contained in the adhesive layer 2 is usually about 0.1 to 30 parts by mass, preferably about 0.3 to 10 parts by mass, and more preferably about 0.5 to 5 parts by mass, with respect to 100 parts by mass of the solid content of the adhesive, from the viewpoint of a balance between fluorescence emission and economy. The adhesive layer 2 may contain various additives such as a plasticizer, a stabilizer, a metal oxide such as titanium dioxide particles, or the like, in addition to the fluorescence dye 9. By using a metal oxide such as titanium dioxide particles in combination, the fluorescence emission of the adherend 8 is less likely to be impaired, when the adhesive label 3 is pasted on the adherend 8 and then removed from the adherend 8.

### <Method of producing print adhesive label>

A method of producing the print adhesive label of the present invention is demonstrated based on FIG. 2 schematically showing the method. First, as shown in FIG. 2, the release sheet 7 consisting of the release sheet substrate 6 and the release layer 5, and the adhesive label 3 consisting of the label substrate 1 of a transparent plastic film and the transparent adhesive layer 2 comprising the fluorescence dye 9, are prepared. The print layer 4 is formed by printing the fixed information and/or variable information on the release layer 5 in the release sheet 7 by using a laser printer, a thermal transfer printer, screen printing, a typewriter, an inkjet printer, or an UV printer, etc. Subsequently, the release sheet 7 on which the print layer 4 is formed, is pasted on the adhesive layer 2 in the adhesive label 3, so that the print adhesive label of the present invention can be produced in which the surface of the adhesive layer 2 has a region where the print layer 4 does not exist in a plan view. That is, the print layer 4 transfers from the release sheet 7 to the adhesive label 3. In addition, this production method is simply one example, and other methods such as a method of printing the print layer 4 directly on the adhesion layer 2, may be also used, as long as the print adhesive label of the present invention is produced.

### <Method of using print adhesive label>

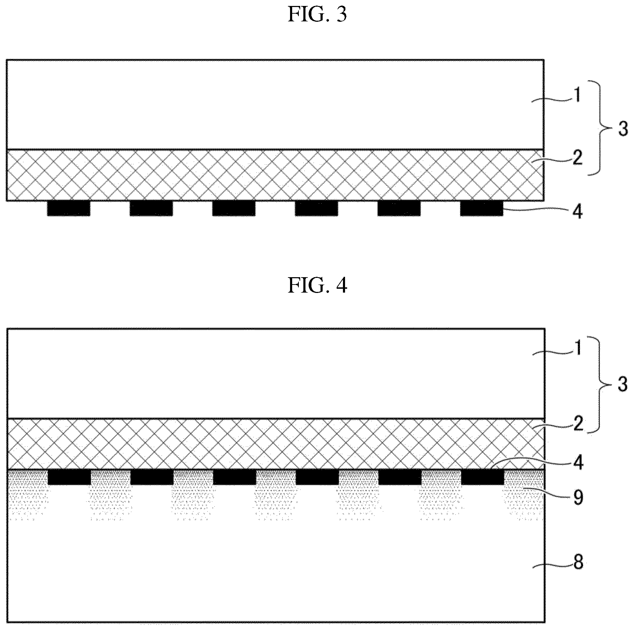

As shown in FIG. 3, the adhesive label 3 having the print layer 4 attached to the adhesive layer 2 is formed, by removing the release sheet 7 from the print adhesive label of the present invention. Subsequently, the adhesive label 3 which the print layer 4 is attached to, is pasted on the adherend 8. Since the surface of the adhesive layer 2 has a region where the print layer 4 does not exist in a plan view, the adhesive layer 2 in this region contacts the adherend 8. As shown in FIG. 4, by contacting the adhesive layer 2 comprising the fluorescence dye 9 with the adherend 8, the fluorescence dye 9 does not transfer to the adherend 8 in a region where the print layer 4 contacts the adherend 8, and the fluorescence dye 9 transfers to the adherend 8 in a region where the print layer 4 does not contact the adherend 8. Since the label substrate 1 and the adhesive layer 2 are transparent in the print adhesive label of the present invention, it is difficult to notice that the adhesive label 3 is pasted, and the adherend 8 is visible as it is, and the designability of the adherend 8 is not impaired. Moreover, since the label substrate 1 and the adhesive layer 2 are transparent, the entire adhesive layer 2 emits light by irradiating a black light (an ultraviolet lamp, etc.) in a state where the adhesive label 3 is pasted on the adherend 8, so that security can be imparted. Further, by making the print layer 4 transparent, information on the print layer 4 cannot be seen without irradiating a black light (an ultraviolet lamp, etc.), so that both security and the designability can be achieved.

The adhesive label 3 is removed from the adherend 8 which the adhesive label 3 which the print layer 4 is attached to is pasted on. Since the fluorescence dye 9 has transferred to the obtained adherend 8 in a region where the print layer 4 does not exist on the surface of the adhesive layer 2 in a plan view, the information of the print layer 4 is confirmed as a reverse image by irradiating a black light. That is, the information of the print layer 4 is confirmed as white spots (in a state where the fluorescence dye 9 does not develop color). When a vulnerable substrate is used as the label substrate 1, since the adhesive label 3 cannot be removed cleanly, it is more effective for preventing falsification.

### EXAMPLE

Hereinafter, the present invention is explained in detail with reference to Examples, Comparative Examples and Experiments. However, the present invention is not limited to these Examples, etc.

### Example 1

A release sheet (Lintec Co., Ltd.: 8E) was provided, which had a release layer with an addition silicone release agent on the polyethylene laminate surface of a release sheet substrate obtained by laminating a polyethylene on one surface of a fine paper having a thickness of 79 µm. Then, information consisting of the characters "TEST" was color-printed on the release layer surface using a laser printer (OKI Europe, Ltd.: desktop color printer).

Next, an adhesive label was prepared, which had a colorless and transparent adhesive layer of an acrylic adhesive comprising 12.7 parts by mass of an oxazole fluorescent dye (name: 2,5-bis(5-tert-butyl-2-benzoxazolyl) thiophene) with respect to 100 parts by mass of the solid content, having a thickness of 24 µm on one side of a colorless and transparent polyester film having a thickness of 50 µm as a label substrate. Then, the adhesive layer in the adhesive label was pasted on the above printed release layer surface to prepare a print adhesive label. In addition, the adhesive layer surface when the release sheet was removed from the print adhesive label, was observed with an optical microscope, and it was confirmed that the print layer was not completely embedded in the adhesive layer.

### Example 2

A print adhesive label was prepared in the same manner as in Example 1 except that the information consisting of the characters "TEST" was printed by colorless and transparent clear printing on the release layer surface by using a UV printer.

### Example 3

A print adhesive label was prepared in the same manner as in Example 1 except that the information consisting of the characters "TEST" was printed by colorless and transparent clear printing on the release layer surface by using a triacetyl cellulose film as a vulnerable label substrate and by using a UV printer.

### Comparative Example 1

A print adhesive label was prepared in the same manner as in Example 1 except that an opaque white polyethylene terephthalate film having a thickness of 50 µm was used as a label substrate.

### Experiment 1: Confirmation of the state of a reverse image of the print layer by transfer of the fluorescence dye

The release sheets were removed from the print adhesive labels of Examples 1 to 3 and Comparative Example 1. The resulting adhesive labels were pasted on 2 mm thick polypropylene plates (PP plates) as adherends, on which a 2 kg rubber roller was reciprocated 5 times. After left to stand at room temperature for 24 hours, the adhesive labels were removed from the PP plates.

A black light was irradiated to the PP plates, and the states of the information of the light emitting part by the fluorescent dye transferred to the PP plates were observed with the naked eyes.

The PP plates obtained using the print adhesive labels of Examples 1 to 3 and Comparative Example 1 were observed, and all the character information of the light emitting part by the fluorescent dye transferred to the PP plates could be recognized, and the reverse images of the print layers were also not blurred. In case of the print adhesive labels of Examples 2 and 3 having the colorless and transparent print layers, the character information of the print layers could not be seen through the adhesive labels unless the adhesive labels were removed and the PP plates were irradiated with a black light, and the character information of the print layers was kept secret. Therefore, security was further higher compared with the print adhesive label of Example 1 having the colored print layer.

### Experiment 2: Confirmation of light emission of the fluorescent dye

The release sheets were removed from the print adhesive labels of Examples 1 to 3 and Comparative Example 1. The resulting adhesive labels were pasted on 2 mm thick polypropylene plates (PP plates) as adherends, on which a 2 kg rubber roller was reciprocated 5 times. After left to stand at room temperature for 24 hours, a black light was irradiated through the adhesive labels, and the light emitting part by the fluorescent dye was observed with the naked eyes.

Regarding the print adhesive labels of Examples 1 to 3, the light emitting part by the fluorescent dye through the adhesive labels could be confirmed. On the other hand, regarding the print adhesive label of Comparative Example 1, the light emitting part by the fluorescent dye through the adhesive label could not be confirmed.

### Experiment 3: Confirmation of the designability of the adherend

The release sheets were removed from the print adhesive labels of Examples 1 to 3 and Comparative Example 1. The resulting adhesive labels were pasted on 50 µm thick polyethylene terephthalate films (adherends) on which predetermined characters were printed. The films in these state were observed with the naked eyes from the print adhesive label side.

Regarding the print adhesive labels of Examples 2 and 3, all the characters printed on the adherends could be read through the adhesive labels, and the designability of the appearance of the adherends was not impaired at all. Moreover, regarding the print adhesive label of Example 1, a part of the characters printed on the adherend could be read through the adhesive label, and the designability of the appearance of the adherend was not impaired. On the other hand, regarding the print adhesive label of Comparative Example 1, the characters printed on the adherend could not be read through the adhesive label, and the designability of the appearance of the adherend was impaired.

### INDUSTRIAL APPICABILITY

According to the present invention, a print adhesive label and an adherend using the same, wherein the pasted security label is inconspicuous, and designability of an adherend such as a product is not impaired, can be provided.

### REFERENCE SIGNS LIST

- 1: label substrate
- 2: adhesive layer
- 3: adhesive label
- 4: print layer
- 5: release layer
- 6: release sheet substrate
- 7: release sheet
- 8: adherend
- 9: fluorescence dye

## Claims

1. A print adhesive label comprising a release sheet consisting of a release sheet substrate and a release layer, and an adhesive label consisting of a label substrate and an adhesive layer,
wherein a print layer with information printed is provided between the release layer and the adhesive layer;
the adhesive layer comprises a fluorescence dye;
the adhesive layer is pasted on the release layer and the print layer;
a surface of the adhesive layer has a region where the print layer does not exist in a planar view;
the label substrate is a transparent plastic film; and
the adhesive layer is transparent.

2. The print adhesive label according to claim 1, wherein the label substrate is a vulnerable substrate.

3. The print adhesive label according to claim 1 or 2, wherein the print layer is transparent.

4. The print adhesive label according to any one of claims 1 to 3,
wherein adhesive transfer does not occur from the adhesive layer, when the release sheet is removed from the adhesive label, and the adhesive layer is pasted on an adherend, and the adhesive label is removed from the adherend.

5. The print adhesive label according to any one of claims 1 to 4, wherein the print layer is not embedded in the adhesive layer, when the release sheet is removed from the adhesive label.

6. An adherend pasted with the print adhesive label according to any one of claims 1 to 5 from which the release sheet is removed.

7. The adherend obtained by removing the adhesive label from the adherend according to claim 6,
wherein the fluorescence dye transfers to a region of the adherend except for a region of the adherend attached to the print layer.
